# EUROPEAN PATENT APPLICATION

(11) **EP 3 706 057 A1**
(43) Date of publication of application: **09.09.2020**
(21) Application number: 19161125.0
(22) Date of filing: 06.03.2019
(51) Int. Cl.: G06Q 10/10

(54) **PRESENTATION OF REMINDERS TO A USER BASED ON REAL-WORLD CUES**

(71) Applicant: Nokia Technologies Oy, 02610 Espoo (FI)
(72) Inventor: WRIGHT, Christopher John, CH-1015 Lausanne (CH); BEARD, Timothy Giles, CH-1015 Lausanne (CH)
(74) Representative: Swindell & Pearson Limited

(57) **Abstract**

An apparatus comprising means for: accessing a reminder item for a user; selecting, based on an expected activity of the user, a real-world cue; generating a reminder content based on a representation of the selected real-world cue and a representation of the reminder item; and rendering the reminder content to the user.

## Description

### TECHNOLOGICAL FIELD

Embodiments of the present disclosure relate to reminders. Some examples relate to apparatus, methods, computer programs for reminding a user.

### BACKGROUND

Some electronic devices have reminder programs that enable the device to generate a reminder prompt for the user of the device. Typically, the user programs the reminder application with a time for producing the reminder prompt and also inputs content for the reminder prompt. At the programmed time, the device displays the reminder content as a reminder prompt.

### BRIEF SUMMARY

According to various, but not necessarily all, embodiments there is provided an apparatus comprising means for:
accessing a reminder item for a user;
selecting, based on an expected activity of the user, a real-world cue;
generating a reminder content based on a representation of the selected real-world cue and a representation of the reminder item; and
rendering the reminder content to the user.

In some but not necessarily all examples, the real-world cue is selected based on a location of the real-world cue relative to one or more locations of the expected activity of the user.

In some but not necessarily all examples, the real-world cue is selected based on a timing of the real-world cue relative to one or more timings of the expected activity of the user.

In some but not necessarily all examples, the real-world cue has one or more visual and/or audio characteristics, and wherein the representation of the real-world cue comprises a representation of one or more of the visual and/or audio characteristics of the real-world cue.

In some but not necessarily all examples, the representation of the one or more of the visual and/or audio characteristics of the real-world cue is dependent upon the location of the real-world cue relative to a location of the expected activity of the user.

In some but not necessarily all examples, the reminder item is associated with an event, wherein the expected user activity is selected to occur at or in advance of the event, and wherein the real-world cue is expected to be received by the user within a threshold time before the event.

In some but not necessarily all examples, the event is a required location of the user within a required time period.

In some but not necessarily all examples, the apparatus comprises means for:
determining, from an expected activity of the user, one or more locations that the user is expected to pass through within a threshold time and/or distance before reaching a location associated with the reminder item, and determining one or more candidate real-world cues available at the determined one or more locations; and
selecting the real-world cue for use in generating the reminder content from the determined one or more candidate real-world cues.

In some but not necessarily all examples, selection of the real-world cue is based on one or more of:
proximity in time and/or location to the expected user activity;
distinctiveness of the real-world cue;
reliability of the real-world cue;
the reminder item;
ease of representation of the real-world cue in the reminder content;
likelihood that the real-world cue will trigger recall when sensed by the user; or likelihood of being noticed by the user.

In some but not necessarily all examples, the reminder content is configured to satisfy a novelty criterion.

In some but not necessarily all examples, the novelty criterion is assessed by a machine learning algorithm.

In some but not necessarily all examples, the apparatus comprises means for:
converting the reminder item to putative information content;
converting the real-world cue to putative cue content;
combining putative information content and putative cue content;
testing different combinations of putative information content and putative cue content;
selecting a combination of putative information content and putative cue content in dependence on the testing; and
generating, using the selected combination, the reminder content based on a representation of the selected real-world cue and a representation of the reminder item.

In some but not necessarily all examples, the reminder content comprises an animation based on a representation of the selected real-world cue and a representation of the reminder item.

According to various, but not necessarily all, embodiments there is provided a method comprising:
accessing for a user a reminder item;
selecting, based on an expected activity of the user, a real-world cue;
generating a reminder content based on a representation of the selected real-world cue and a representation of the reminder item; and
rendering the reminder content to the user.

According to various, but not necessarily all, embodiments there is provided a computer program comprising instructions that when run on a processor enables the processor to
cause accessing for a user a reminder item;
cause selecting, based on an expected activity of the user, a real-world cue;
cause generating reminder content based on a representation of the selected real-world cue and a representation of the reminder item; and
cause rendering of the reminder content to the user.

According to various, but not necessarily all, embodiments there is provided examples as claimed in the appended claims.

### BRIEF DESCRIPTION

Some example embodiments will now be described with reference to the accompanying drawings in which:
FIG. 1 shows an example embodiment of the subject matter described herein;
FIG. 2 shows another example embodiment of the subject matter described herein;
FIG. 3 shows another example embodiment of the subject matter described herein;
FIG. 4 shows another example embodiment of the subject matter described herein;

### DETAILED DESCRIPTION

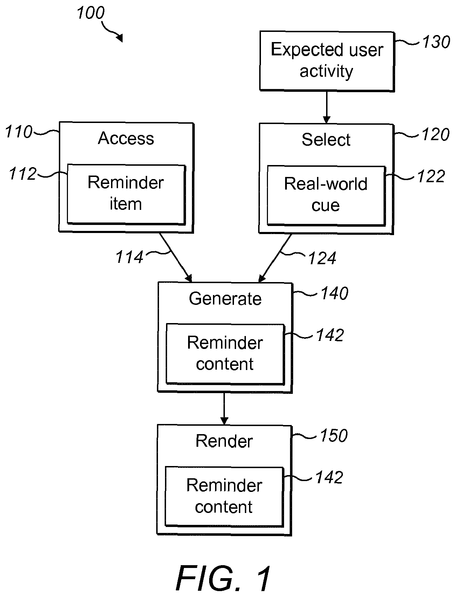

FIG 1 illustrates an example of a method 100 that sets up a reminder for a user.

At block 110, the method comprises accessing a reminder item 112 for a user. At block 120, the method comprises selecting a real-world cue 122. The selecting is based on an expected activity 130 of the user. At block 140, the method comprises generating a reminder content 142 based on a representation 124 of the selected real-world cue 122 and a representation 114 of the reminder item 112. At block 150, the method 100 comprises rendering the reminder content 142 to the user.

In some but not necessarily all examples, at block 120, the method comprises selecting one real-world cue 122 and at block 140, the method comprises generating a reminder content 142 based on a representation 124 of the selected one real-world cue 122 and a representation 114 of the reminder item 112. In other examples, at block 120, the method comprises selecting multiple real-world cues 122 and at block 140, the method comprises generating a reminder content 142 based on a representation 124 of the selected multiple real-world cues 122 and a representation 114 of the reminder item 112 or based on representations 124 of each of the selected multiple real-world cues 122 and a representation 114 of the reminder item 112.

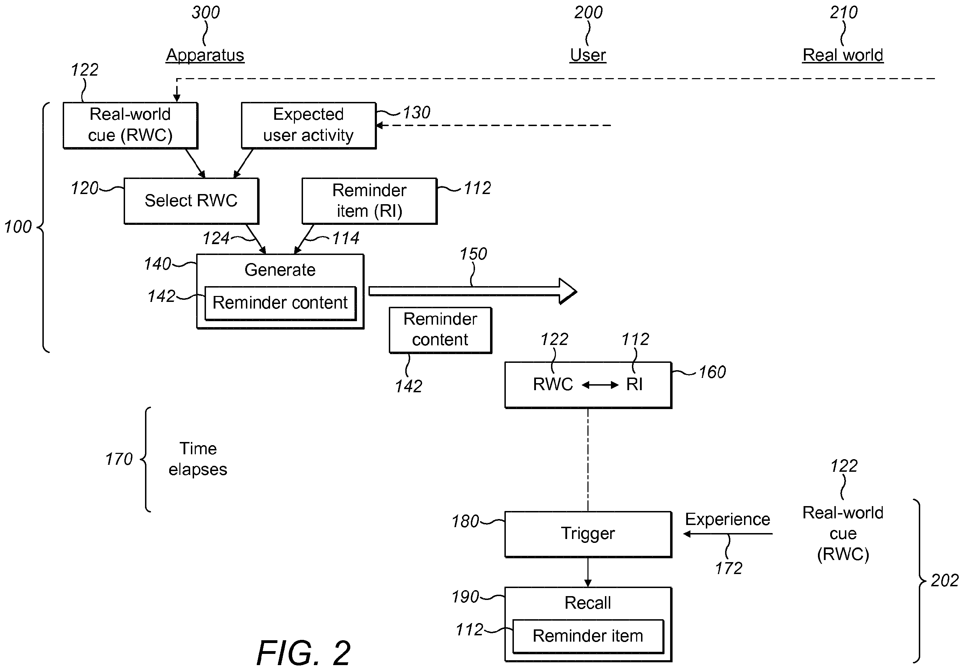

FIG 2 illustrates an example in which the method 100 sets up a reminder for a user 200 and also illustrates a method 202 in which the user recalls the reminder item 112.

The method 100 is as illustrated in FIG 1. At block 120, the method 100 selects, based on expected activity 130 of the user 200, a real-world cue 122. The dotted lines in the figure illustrate that the real-world cue 122 is associated with the real world 210 and that the expected user activity 130 is associated with the user 200. The method 100 generates 140 a reminder content 142 based on a representation 124 of the selected real-world cue 122 and a representation 114 of the reminder item 112. Then, the method 100 renders 150 the reminder content 142 to the user 200.

The method 100 is performed by an apparatus 300. The rendering of the reminder content 142 creates an association 160, in the mind of the user 200, of the representation 124 of the selected real-world cue 122 and the representation 114 of the reminder item 112. This creates an association, in the mind of the user 200, between the selected real-world cue 122 and the reminder item 112.

It will be appreciated in the following description that the real-world cue 122 acts like a real-world address for addressing the reminder item 112 in the mind of the user 200.

After some time elapses 170, the user 200 performs a recall method 202. This recall method 202 is performed by the user 200 as a consequence of experiencing 172 the real-world cue 122 which has previously been associated 160 in the mind of the user with the reminder item 112. The user 200, who is in the real world 210, experiences 172 the real-world cue 122. This triggers 180 recall 190 of the reminder item 112. The experienced real-world cue 122 addresses the reminder item 112 via the association 160. As a consequence, the user 200 has been reminded, via recall 190, of the reminder item 112.

It is important to note that the recall method 202 operates independently of the apparatus 300. The user 200 does not therefore need to be distracted by the apparatus 300, nor does the apparatus need to be carried with the user 200 or to be switched on.

It should be noted that it is the real-world cue 122 (not the reminder content 142) that is close in time and space to the expected user activity 130. The reminder content 142 is decoupled in time and space from the triggering 180 that causes the user 200 to recall 190 the reminder item 112.

In the preceding examples, the access 110 to the reminder item 112 of the user 200 can, for example, be immediately after creation of the reminder item 112 in response to a user input (e.g. browsing existing reminders in a calendar application), or could be in response to receiving a reminder shared by another user, etc.

In some examples, a reminder item 112 for a user 200 may be specified either by the user 200 or by the apparatus 300. Specifying a reminder item 112 may, for example, involve the creation of the reminder item 112, editing the reminder item 112 or adapting the reminder item 112.

The reminder item 112 may be any suitable information. In some, but not necessarily all, examples, the reminder item 112 may be associated with a person, object or task. In some examples, the reminder item 112 may be associated with a location either explicitly or implicitly. The explicit association of a reminder item 112 with a location may be achieved via a map interface or by specifying a postcode (zip code) or a street address. The implicit association of a reminder item with a location may be based upon the information content of the reminder item and/or its context. For example, the reminder item 112 may be for the user 200 to buy some bread. The reminder item 112 can be automatically associated with a location of a bakery, for example, a preferred bakery frequented by the user 200. Alternatively, a location database may be accessed to identify possible retail locations where bread, or any other consumer goods identified in the reminder item 112, can be purchased.

The expected user activity 130 is a user activity that can be expected to happen. Such an activity can be determined by accessing calendar information, for example, via a calendar application on the apparatus 300 or on a remote server, and determining an expected itinerary for the user 200. Alternatively, or in addition, the expected user activity 130 may be determined from an expected itinerary that is based upon a record of the usual or habitual movements of the user 200. Statistical analysis may be used to determine what user activity is to be expected.

The expected user activity 130 enables the apparatus 300 to determine locations that the user 200 will be expected to pass through within some threshold time and/or distance of reaching a location associated with the reminder item 112.

The real-world cue 122 is something that has presence in the real world 210 and can be experienced 172 by the user 200 in the real world 210.

The real-world cue 122 can have one or more visual and/or audio characteristics. It can have a physical presence, for example, it may be a building, a landscape, a road junction, an entranceway, particular signage, etc. The real-world cue 122 can have a permanent or temporary presence in the real world 210.

In some, but not necessarily all, examples, the real-world cue 122 is selected based on a location of the real-world cue 122 relative to one or more locations of the expected activity 130 of the user 200 and/or is selected based on a timing of the real-world cue 122 relative to one or more timings of the expected activity 130 of the user 200.

For example, the reminder item 112 can be associated with an event which is some combination of time and location. The expected user activity 130 is then selected to occur at or in advance of the event. Then the real-world cue 122 is selected because it is expected to be received (experienced 172) by the user 200 within a threshold time before the event. For example, the reminder item may be associated with a location and a time period in which case the event is the required location for that time period. The expected user activity 130 is selected to occur at or in advance of the user reaching the required location. The real-world cue 122 is selected, based on the expected user activity 130, to be experienced 172 by the user 200 within a threshold time before the user reaches the required location.

In an example use case, the reminder item may be a reminder to "buy bread". The absence of an explicit time period, implies a time period of today before reaching home. The reminder item 112 is associated with a time period suitable for the purchase of bread (which may be bakery dependent) before reaching home. The expected user activity 130 is selected to occur in advance of the user reaching home. In one example, the reminder item 112 is associated with a first event such as a bakery local to the user's home at a time when the user has left work and is approaching home but before the user has passed a turning to the bakery. The expected user activity 130 is selected to be a latter phase of the user's journey home and the real-world cue 122 is selected to be a junction at which the user needs to turn-off a normal car route home to go to a bakery close to home to purchase the bread. In another example, the reminder item 112 is associated with a second event such as a bakery local to the user's work at a time when the user has just left work and before the user has reached his car. The expected user activity 130 is selected to be a phase of the user's journey from work to car and the real-world cue 122 is selected to be an exit from the workplace that is frequently used by the user 200. If the opening times of the bakery close to home and the expected journey time of the user 200 home do not coincide, then the real-world cue 122 is selected to be an exit from the workplace.

It will be appreciated from the foregoing that the real-world cue 122 is preferably novel (distinctive) enough to be noticeable, reliable, and close enough in time and/or space to a required time/space (an event) to be a timely prompt for recalling the reminder item 112. For example, the real-world cue 122 may be within a distance threshold and/or within a time threshold to a required time/space (an event) associated with the reminder item. In some examples, the threshold used may depend upon the novelty (distinctiveness) of the real-world cue 122.

The novelty (distinctiveness) of a real-world cue may be assessed using a machine learning algorithm or by using computer vision. A machine learning algorithm can identify when an image of a real-world cue 122 is unusual. Alternatively, computer vision can be used to perform an image search to return similar images. The number of similar images returned for different real-world cues is an indication of the novelty (distinctiveness) of the real-world cue 122.

It is desirable that the real-world cue 122 is a noticeable, timely prompt in the real world 210.

From the above description, it will be appreciated that the selection of the real-world cue 122 can be based on one or more of proximity in time and/or location to the expected user activity; distinctiveness of the real-world cue 122; or reliability of the real-world cue 122. In this context reliability of the real-world cue means the likelihood that the user 200 will experience 172 the real-world cue 122. This may be because of the prominence of the real-world cue; for example its location relative to a likely viewing direction of the user, the possibility that it will be missed because the user is distracted or is concentrating on some other activity such as driving, or the possibility that the real-world cue 122 is not permanent but is transient and may not be present when the user 200 is present.

It may also be desirable to base the selection of the real-world cue 122 in dependence upon any associations that the reminder item 112 has with the real-world cue 122. The real-world cue 122 may, for example, have a similar shape to the reminder item, similar color or be related to it in some other way.

The selection of the real-world cue 122 may additionally or alternatively be based on an ease of representation 124 of the real-world cue 122 in the reminder content 142. For example, the real-world cue 122 can be selected because it has certain features which are identifiable as being manipulatable for generating reminder content 142.

The selection of the real-world cue 122 is controlled so that the likelihood that the real-world cue 122 will trigger 180 recall 190 when experienced 172 by the user 200 is increased or the likelihood of the real-world cue 122 being noticed (experienced 172) by the user 200 is increased.

In some, but not necessarily all, examples, a database of possible real-world cues 122 can be accessed by the apparatus 300 to determine the real-world cue 122 or to determine candidate real-world cues 122. The database can in some examples be stored on the apparatus 300 and in other examples may be accessed via a network by the apparatus 300.

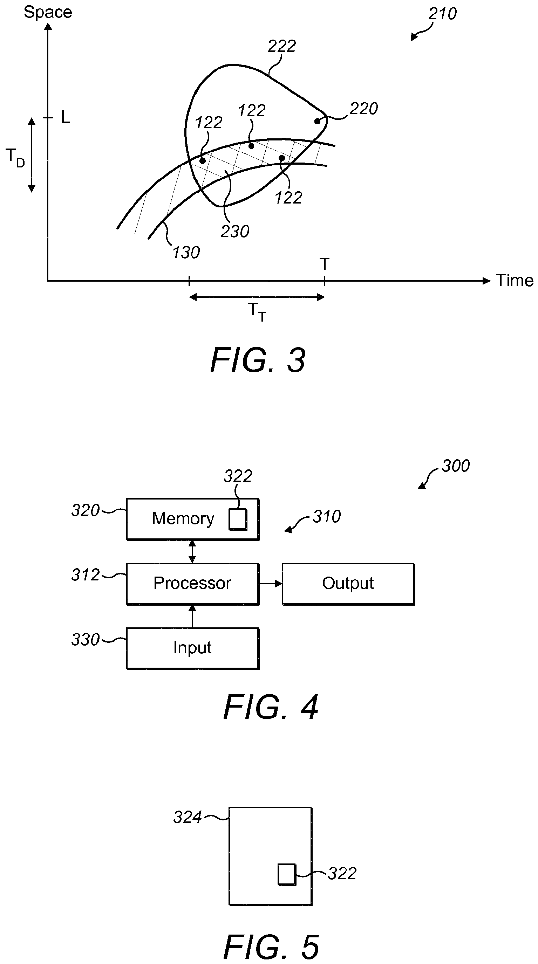

FIG 3 illustrates an example of how selecting 120 a real-world cue 122 can occur. FIG 3 represents the real world 210. The figure plots space as a y-axis and time as an x-axis. Although the figure illustrates space as a one-dimensional parameter, it should be appreciated that this should not be interpreted as limiting and the space may be two- or three-dimensional.

A location L is associated with the reminder item 112. A time period T is associated with the reminder item 112. The location L and period T define an event 220. A threshold 222 in space-time is characterized by a threshold time T_{T} before the event 220 and/or a threshold distance T_{D} within a location L of the event 220.

The method of selecting 120 comprises determining, from an expected activity 130 of the user 200, one or more locations 230 that the user 200 is expected to pass through within a threshold time T_{T} and/or threshold distance T_{D} of the event 220, and determining one or more candidate real-world cues 122 available at one or more of the determined one or more locations 230; and selecting the real-world cue 122 for use in generating 140 the reminder content 142 from the determined one or more candidate real-world cues 122.

Each of the candidate real-world cues 122 may be suitable for being used as the selected real-world cue 122. The determination of which of the candidate real-world cues 122 is selected may be based upon one or more of proximity in time and/or location to the expected user activity 130 or event 220; distinctiveness of the real-world cue 122; reliability of the real-world cue 122; associations of the real world cue 122 with the reminder item 112; ease of representation of the real-world cue 122 in the reminder content 142; likelihood that the real-world cue 122 will trigger 180 recall 190 when experienced 172 by the user 200; or a likelihood of the real-world cue 122 being noticed by the user 200.

The real-world cue 122 has one or more visual and/or audio characteristics, the representation 124 of the real-world cue 122 comprises a representation of one or more of the visual and/or audio characteristics of the real-world cue 122. The representation of one or more of the visual and/or audio characteristics of the real-world cue 122 is sufficient to allow user recall 190 to be triggered 180 by experiencing 172 the real-world cue 122 in the real-world 210.

The representation 124 of the one or more of the visual and/or audio characteristics of the real-world cue 122 can be dependent upon the location of the real-world cue relative to a location of the expected activity 130 of the user 200. For example, if the real-world cue 122 is a tall building, the representation 124 of the real-world cue 122 may lean, in a way the real-world cue 122 does not lean in the real world 210, towards a location associated with the reminder item 122. The representation 124 of the real-world cue 122 therefore differs from the real-world cue 122 in the real world 210 in a manner that acts as a sign-post for a location associated with the reminder item 112. The representation 124 of the selected real-world cue 122 may be found from a database such as open source 3D maps, or location tagged image databases, or the internet.

The more novel (distinctive) the reminder content 142 is then the more likely it is to be memorable and therefore act as an effective trigger 180.

The reminder content 142 could be an image, series of images, animation, video etc. and/or audio, series of audio etc.

In one example, the reminder content 142 comprises the representation 124 of the selected real-world cue 122 and the representation 114 of the reminder item 112 in a side-by-side arrangement.

In one example, the reminder content 142 comprises the representation 124 of the selected real-world cue 122 on which is overlaid a representation 114 of the reminder item 112. For example, computer vision may be used to determine a framework for the real-world cue 122. The representation 114 of the reminder item 112 may be warped to match a first portion of the framework. The portion of the representation 124 of the selected real-world cue 122 that matches that first portion of the framework is then replaced or overlaid by the warped representation 114 of the reminder item 112. This creates the visual impression of the representation 114 of the reminder item 112 wrapping at least a portion of the representation 124 of the real-world item 122. Which part of the representation 124 of the real-world cue 122 is overlaid, how much is overlaid or how it is overlaid can be controlled to increase novelty (distinctiveness) while retaining recognisability of the representation 124 of the real-world cue 122.

In one example, the reminder content 142 comprises an animation in which the representation 124 of the selected real-world cue 122 is replaced by the representation 114 of the reminder item 112. In some examples, the replacement may occur in a visually striking manner. For example, the representation 124 of the real-world cue 122 may melt, unwrap or disappear to reveal the representation 114 of the reminder item 112. For example, the representation 114 of the reminder item 112 may fall to squash and replace the representation 124 of the real-world cue 122. For example, the representation 114 of the reminder item 112 may morph into the representation 124 of the real-world cue 122 or vice versa.

How the representation 124 of the real-world cue 122 is replaced and by how much, can be controlled to increase novelty (distinctiveness) while retaining recognisability of the representation 124 of the real-world cue 122.

In one example, machine learning, for example a generative adversarial neural network (GANN) is used to produce the reminder content 142 by combining the representation 124 of the selected real-world cue 122 and the representation 114 of the reminder item 112. The GANN may be configured to produce reminder content 142 that is novel (distinctive) but in which the real-world cue 122 is still recognizable. The algorithm can be updated with feedback based upon effectiveness of the produced reminder content 142 in successfully causing the user experiencing 172 the real-world cue 122 to trigger 180 recall 190 of the reminder item 112.

In one example, the reminder content 142 can be generated from a rulebook or library of approved actions for converting the representation 124 of the selected real-world cue 122 and the representation 114 of the reminder item 112 into the reminder content 142. For example, the reminder content 142 may retain certain visual characteristics of the real-world cue 122 that are important for recognizability while changing other properties to create novelty (distinctiveness). As an example, size, motion, color may be made unusual, whereas scale may be maintained.

In one example, the reminder content 142 can be generated based on shared features of the selected real-world cue 122 and the reminder item 112. For example, if the reminder item is that the user should buy milk, then a look-up of features for milk may include
- liquid (white)
- white (liquid)
- cow
- pour (from carton)
etc.

The real-world cue 122 can be selected because it has a feature in common with the features of the reminder item 112. For example, a building with a lake or other body of water adjacent it may be selected because that real-world cue 122 is associated via lake with 'liquid'. The reminder content 142 may reproduce an image of the building with the body of water but replace the water with milk in the image. Optionally milk from a carton may be pouring into the body of milk.

Which reminder content 142 is used may be based on an assessment of novelty (distinctiveness) or other criteria as previously discussed, using a machine learning algorithm
For example, the generation 140 of the reminder content 142 can, in some examples, be performed by, for example a machine learning algorithm, and comprise:
converting the reminder item 112 to putative information content;
converting the real-world cue 122 to putative cue content;
combining putative information content and putative cue content;
testing different combinations of putative information content and putative cue content;
selecting a combination of putative information content and putative cue content in dependence on the testing; and
generating, using the selected combination, the reminder content based on a representation of the selected real-world cue and a representation of the reminder item.

The above algorithm provides flexibility in modification of the representation 114 of the reminder item 112 and/or the representation 124 of the real-world cue 122; and flexibility in their combination to create the reminder content 142.

The method may additionally comprise: determining an effectiveness of the rendered reminder content 142 in facilitating recall 90 by the user 200 of the reminder item 112; and modifying, to increase effectiveness of rendered reminder content in facilitating recall by the user, future selection 120, based on an expected activity 130 of the user 200, of a real-world cue 122 and/or future generation 140 of a reminder content 142 based on a representation 124 of the selected real-world cue 122 and a representation 114 of a reminder item 112. This may be achieved by providing a learning feedback loop to a machine learning algorithm.

The effectiveness of the rendered reminder content 142 in facilitating recall 190 by the user 200 of the reminder item 112 may be tracked automatically by the apparatus 300. The apparatus can, for example, determine whether or not the user 200 when to the location associated with the reminder item 112 within an expected time limit.

The reminder content 142 is configured to create an opportunity for the real-world cue 122 to act as a sensory stimulus (visual, sound, haptics) for the user 200 and trigger 180 timely recall 190 by the user 200 of the reminder item 112, wherein rendering the reminder content 142, compared to not rendering the reminder content 142, increases a likelihood that a user 200 recalls the reminder item 112 when performing the expected user activity 130. An increase in likelihood can be determined statistically using a sample of users who perform the same expected activity some of whom receive the same cue and some of whom do not

In some but not necessarily all examples, the reminder item 112 is a prompt for the user 200 to follow-through on one or more actions.

Fig 4 illustrates an example of an apparatus 300 comprising a controller 310, a user input interface 330 and a user output interface 340, for example, a display for visual output and speaker for audio output. Implementation of the controller 310 may be as controller circuitry. The controller 310 may be implemented in hardware alone, have certain aspects in software including firmware alone or can be a combination of hardware and software (including firmware).

As illustrated in Fig 4 the controller 310 may be implemented using instructions that enable hardware functionality, for example, by using executable instructions of a computer program 322 in a general-purpose or special-purpose processor 312 that may be stored on a computer readable storage medium (disk, memory etc.) to be executed by such a processor 312.

The processor 312 is configured to read from and write to the memory 320. The processor 312 may also comprise an output interface via which data and/or commands are output by the processor 312 and an input interface via which data and/or commands are input to the processor 312.

The memory 320 stores a computer program 322 comprising computer program instructions (computer program code) that controls the operation of the apparatus 300 when loaded into the processor 312. The computer program instructions, of the computer program 322, provide the logic and routines that enables the apparatus to perform the methods illustrated in Figs 1, 2 & 3. The processor 312 by reading the memory 320 is able to load and execute the computer program 322.

The apparatus 300 therefore comprises:
at least one processor 312; and
at least one memory 320 including computer program code
the at least one memory 320 and the computer program code configured to, with the at least one processor 312, cause the apparatus 300 at least to perform:
   accessing a reminder item for a user;
   selecting, based on an expected activity of the user, a real-world cue;
   generating a reminder content based on a representation of the selected real-world cue and a representation of the reminder item; and
   rendering the reminder content to the user.

As illustrated in Fig 5, the computer program 322 may arrive at the apparatus 300 via any suitable delivery mechanism 324. The delivery mechanism 324 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 322. The delivery mechanism may be a signal configured to reliably transfer the computer program 322. The apparatus 300 may propagate or transmit the computer program 322 as a computer data signal.

Computer program instructions for causing an apparatus to perform at least the following or for performing at least the following:
accessing a reminder item for a user;
selecting, based on an expected activity of the user, a real-world cue;
generating a reminder content based on a representation of the selected real-world cue and a representation of the reminder item; and
rendering the reminder content to the user.

The computer program instructions may be comprised in a computer program, a non-transitory computer readable medium, a computer program product, a machine readable medium. In some but not necessarily all examples, the computer program instructions may be distributed over more than one computer program.

Although the memory 320 is illustrated as a single component/circuitry it may be implemented as one or more separate components/circuitry some or all of which may be integrated/removable and/or may provide permanent/semi-permanent/ dynamic/cached storage.

Although the processor 312 is illustrated as a single component/circuitry it may be implemented as one or more separate components/circuitry some or all of which may be integrated/removable. The processor 312 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 1, 2 & 3 may represent steps in a method and/or sections of code in the computer program 322. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

In some but not necessarily all examples, the apparatus 300 is configured to communicate data from the apparatus 300 with or without local storage of the data in a memory 320 at the apparatus 300 and with or without local processing of the data by circuitry or processors at the apparatus 300.

The data may, for example, be measurement data or data produced by the processing of measurement data.

The data may be stored in processed or unprocessed format remotely at one or more devices. The data may be stored in the Cloud.

The data may be processed remotely at one or more devices. The data may be partially processed locally and partially processed remotely at one or more devices.

The data may be communicated to the remote devices wirelessly via short range radio communications such as Wi-Fi or Bluetooth, for example, or over long range cellular radio links. The apparatus may comprise a communications interface such as, for example, a radio transceiver for communication of data.

The apparatus 300 may be part of the Internet of Things forming part of a larger, distributed network.

The processing of the data, whether local or remote, may involve artificial intelligence or machine learning algorithms. The data may, for example, be used as learning input to train a machine learning network or may be used as a query input to a machine learning network, which provides a response. The machine learning network may for example use linear regression, logistic regression, vector support machines or an acyclic machine learning network such as a single or multi hidden layer neural network.

The processing of the data, whether local or remote, may produce an output. The output may be communicated to the apparatus 300 where it may produce an output sensible to the subject such as an audio output, visual output or haptic output.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The algorithms hereinbefore described may be applied to achieve the following technical effects: reminders while saving power.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a subclass of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above
Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
accessing a reminder item for a user;
selecting, based on an expected activity of the user, a real-world cue;
generating a reminder content based on a representation of the selected real-world cue and a representation of the reminder item; and
rendering the reminder content to the user.

2. An apparatus as claimed in claim 1, wherein the real-world cue is selected based on a location of the real-world cue relative to one or more locations of the expected activity of the user.

3. An apparatus as claimed in claim 1 or 2, wherein the real-world cue is selected based on a timing of the real-world cue relative to one or more timings of the expected activity of the user.

4. An apparatus as claimed in claim 1, 2 or 3, wherein the real-world cue has one or more visual and/or audio characteristics, and wherein the representation of the real-world cue comprises a representation of one or more of the visual and/or audio characteristics of the real-world cue.

5. An apparatus as claimed in claim 4 when dependent on claim 2, wherein the representation of the one or more of the visual and/or audio characteristics of the real-world cue is dependent upon the location of the real-world cue relative to a location of the expected activity of the user.

6. An apparatus as claimed in any preceding claim, wherein the reminder item is associated with an event, wherein the expected user activity is selected to occur at or in advance of the event, and wherein the real-world cue is expected to be received by the user within a threshold time before the event.

7. An apparatus as claimed in claim 6, wherein the event is a required location of the user within a required time period.

8. An apparatus as claimed in any preceding claim comprising means for:
determining, from an expected activity of the user, one or more locations that the user is expected to pass through within a threshold time and/or distance before reaching a location associated with the reminder item, and determining one or more candidate real-world cues available at the determined one or more locations; and
selecting the real-world cue for use in generating the reminder content from the determined one or more candidate real-world cues.

9. An apparatus as claimed in any preceding claim wherein selection of the real-world cue is based on one or more of:
proximity in time and/or location to the expected user activity;
distinctiveness of the real-world cue;
reliability of the real-world cue;
the reminder item;
ease of representation of the real-world cue in the reminder content;
likelihood that the real-world cue will trigger recall when sensed by the user; or
likelihood of being noticed by the user.

10. An apparatus as claimed in any preceding claim, wherein the reminder content is configured to satisfy a novelty criterion.

11. An apparatus as claimed in claim 10, wherein the novelty criterion is assessed by a machine learning algorithm.

12. An apparatus as claimed in any preceding claim further comprising means for:
converting the reminder item to putative information content;
converting the real-world cue to putative cue content;
combining putative information content and putative cue content;
testing different combinations of putative information content and putative cue content;
selecting a combination of putative information content and putative cue content in dependence on the testing; and
generating, using the selected combination, the reminder content based on a representation of the selected real-world cue and a representation of the reminder item.

13. An apparatus as claimed in any preceding claim, wherein the reminder content comprises an animation based on a representation of the selected real-world cue and a representation of the reminder item.

14. A method comprising:
accessing for a user a reminder item;
selecting, based on an expected activity of the user, a real-world cue;
generating a reminder content based on a representation of the selected real-world cue and a representation of the reminder item; and
rendering the reminder content to the user.

15. A computer program comprising instructions that when run on a processor enables the processor to
cause accessing for a user a reminder item;
cause selecting, based on an expected activity of the user, a real-world cue;
cause generating reminder content based on a representation of the selected real-world cue and a representation of the reminder item; and
cause rendering of the reminder content to the user.
